# EUROPEAN PATENT SPECIFICATION

(11) **EP 1 613 444 B1**
(45) Date of publication and mention of the grant of the patent: **15.09.2010**
(21) Application number: 04725731.6
(22) Date of filing: 05.04.2004
(51) Int. Cl.: B23K 20/12, B21D 26/02

(54) **METHOD OF SUPERPLASTIC FORMING A BLANK**
VERFAHREN ZUM SUPERPLASTISCHEM VERFORMEN EINES ROHLINGS
PROCEDE DE FORMAGE SUPERPLASTIQUE D'UNE ÉBAUCHE

(30) Priority: 07.04.2003 US 408136
(43) Date of publication of application: 11.01.2006
(73) Proprietor: LUXFER GROUP LIMITED, Manchester M5 2SP (GB)
(72) Inventor: BARNES, Anthony, John, Crestline, CA 92325 (US)
(74) Representative: Williams, Ceili
(86) International application number: PCT/GB2004/001491
(87) International publication number: WO 2004/089571

(56) References cited:
- EP-A- 1 245 325
- WO-A-02/070186
- PATENT ABSTRACTS OF JAPAN vol. 1999, no. 05, 31 May 1999 (1999-05-31) & JP 11 047859 A (MITSUBISHI HEAVY IND LTD), 23 February 1999 (1999-02-23)

## Description

This invention relates to a method of material forming to produce shaped parts. The invention is particularly directed to the superplastic forming (SPF) process utilising certain materials, primarily metallic, which exhibit superplastic properties. Such a process is known from JP 2002292435 which further describes tailored blanks made from superplastic materials having different thicknesses.

Superplasticity can be defined in various different ways, but generally it is a property exhibited by certain materials whereby they are able, at an appropriate temperature and strain rate, typically in the range 10-³S-¹ to 10⁻⁴ S⁻¹, to undergo plastic deformation to very large (e.g. 200% or more) elongations under tension without rupture. High strain rate superplasticity may be defined as a minimum strain rate of 10⁻² S⁻¹ and is typically found in materials produced by Equal Channel Angular Pressing (ECAP) or friction stir processing (FSP). Materials which possess superplastic properties may be formed, using processes such as SPF, into complex 3D shapes such as are needed in the aerospace and automotive industries.

Several materials exhibit superplastic properties, but only a relatively small number find commercial applications. These include certain alloys of aluminium, of titanium of nickel and of magnesium. Various methods can be used to achieve the fine grain microstructure which is necessary for materials to exhibit superplasticity. Unfortunately these methods usually involve quite complex and expensive processing to convert a base material, which does not possess superplastic properties at all or only to a small extent, into one which does possess the required superplastic properties. For example, US patent application No 2002/0079351 describes a technique in which superplastic properties are generated locally in a parent metal using FSP. The blank thus created can thence be deformed to create a desired 3D article by a forming process such as forging, rolling, drawing, bending, extruding, gas forming, punching or stamping. That part of the blank which has been rendered superplastic by the FSP is sufficiently ductile to deform to the required shape whereas the remainder of the blank is not.

Friction stir welding (FSW) is described, for example, in WO 93/10935 and is typically used to join two workpieces. The process involves plunging a rotating or reciprocating probe into the workpiece to be joined, and moving the probe along the line of the join. The heat generated by the frictional engagement of the probe with the workpieces generates an area of plasticised material which, after passage of the probe, joins across the join line to weld the workpieces together.

In the present invention, we seek to achieve a blank which is functionally similar to that obtained in the process described in the above-mentioned US patent application No. 2002/0079351 in that it comprises a limited area within the parent metal which has superplastic properties and which thus, during a subsequent forming process, will readily deform to produce the required shape, leaving the remaining material either not deformed at all, or deformed only to a limited extent within its plastic capabilities. The technique of the present invention leads, however, to a number of advantages over the prior-art process, which advantages will become apparent in the following description.

According to a first aspect of the invention there is provided a method of superplastic forming, the method comprising the steps of: preparing a blank by joining at least one insert to a parent body by means of friction stir welding, one of the parent body and the insert or inserts being made of a material which has superplastic properties and superplastic forming the blank by pressuring it against a mould. The part or parts of the blank that is made of superplastic material is located so as to correspond to an area of the blank which, during the forming process, is to be deformed to a greater extent than the remainder of the blank.

The preferred method is superplastic forming at elevated temperature with pressurised fluid, as will be described in more detail below.

The use of the terms "patent body" and "insert" are not intended to imply any particular size relationship between the two, but are used simply to enable the two parts to be readily distinguished. It will, however, often be the case that the part of the blank that is superplastic will be the smaller in size since investigation has shown that, in many cases, it is only a relatively small proportion of a blank that is subjected to deformation, during the forming process, of sufficient magnitude to warrant the need for a superplastic material. Thus, fabricating the whole blank of superplastic material is often unnecessary and, since such materials are more expensive to produce, costs can be saved by using as little as possible of the superplastic material. However, we do not wish to exclude the possibility that the remainder of the blank is also of superplastic material and, indeed, the degree of superplasticity of the parent body, whilst normally different to that of the insert, may in certain circumstances be of a similar level to or equal to that of the insert.

In most cases that region or regions of the blank which are to be subject to the greatest strain during the superplastic forming process will correspond to that region or regions of the blank which have said superplastic properties. However, there may be occasions when this is not the case; for example:
1) Where there is a need for a different alloy in a certain region;
2) Where a superplastic insert is present for purposes other than purely to accommodate strain - for example, an insert having a profiled thickness may be positioned not in the region of maximum expected strain, but where it is needed in order to maintain or enhance thickness. Alternatively, the primary purpose of the insert may be to provide a local fixing which may not correspond with the region of maximum expected strain. Still further, the insert may be required to actually provide a greater or a reduced thickness over a particular region in the finished product, and the position of this may be unrelated to the region of maximum expected strain during forming.

In the preferred embodiment it is the insert that is formed of superplastic material, and the parent body is formed from a material which is either not superplastic at all, or is superplastic to a lesser extent. For simplicity of description, this arrangement will be assumed hereafter. Thus, during the forming process, there are two possibilities:-
1) The parent body remains undeformed during the forming process, deformation only occurring within the insert;
2) Both the parent body and the insert are deformed during the forming process, but the insert is positioned in that region which requires an amount of deformation sufficient to warrant the use of a superplastic material, the remaining parts being deformed to a lesser extent than this.

The blank may be formed of multiple inserts, each friction stir welded to the parent body. Some or all of these inserts may be made out of superplastic material. In addition, the or each insert may further be provided with means whereby it may perform a mechanical function, for example stiffening or providing a threaded bore for a fastening in the finished part.

The or each insert may be positioned in relation to the parent body in various different ways. For example an insert may simply abut one edge of the parent body and be joined along the abutting edge. Alternatively, the parent body may be cut out to receive the insert, either by way of slot opening into an edge of the parent body, or by way of a closed cut-out in the parent body. In a further alternative, the insert may overlie the parent body and be joined thereto, thus forming a two-layered composite structure in the area of the insert. Such an insert may more properly perhaps be referred to as a patch, since it is not "inserted" into an opening in the parent body. Thus the word "insert" as used herein should be construed with this in mind. Where a two-layered region is formed by a patch-type insert, care needs to be taken with the properties of the underlying material of the parent body; clearly the superplasticity of the two-layered structure is dictated by both layers, and if the elasticity of the parent body, at least in the region concerned, is not the same as or similar to that of the insert, then the overall superplasticity may be impaired. In a still further alternative, an insert and a patch may be used, by joining a patch in such a way as to wholly or partially overlie an existing insert thus forming, in effect, a composite insert comprising two layered parts. In practice, both parts of such a composite insert may be joined to the parent body in a single FSW operation.

A particular benefit of friction stir welding as a joining method is that it is a solid state process in which there is no melting, unlike conventional fusion welding where melting occurs. Accordingly the superplastic properties of the or each insert are not impaired during the joining process; indeed in the immediate area of the join they may be enhanced. In addition the area of superplasticity may be extended for a short distance into the parent body (see the above-mentioned US patent application No. 2002/0079351). By contrast, fusion welding creates a cast material in the area of the join, together with heat-affected areas leading to reduced ductility. FSW also has the ability to produce joints between dissimilar materials including but not limited to aluminium and magnesium alloys.

The or each insert may or may not be the same thickness as the parent body. In one embodiment the insert is thicker than the parent body, but tapers at its edges so as to avoid a step where it joins the parent body.

Such a step would be undesirable in the event that FSW is used since the FSW tool is normally waisted and thus a substantially equal thickness on each side of the join is desirable, although techniques for FSW welding of sheets presenting different thicknesses along the line of the join are now available.

One or both surfaces of the insert may be contoured to achieve particular desired properties, as will be explained in more detail hereinafter.

Making the insert thicker and/or contouring the surface of the insert is usually carried out either to compensate for local thinning of the material during forming, or for mechanical reasons such as a requirement for local stiffening, or the need to secure a fastening. It will be seen that, where thinning is a particular concern, the parent body and the insert may both have superplastic properties and moreover, the superplasticity of the insert may be little, or even no, greater than that of the parent body. Generally speaking however, as already mentioned, the superplasticity of the insert will be greater than that of the parent body.

Where there are multiple inserts, they may have different thickness, according to the particular requirement at their location; likewise some may be contoured, others not, or there may be a mixture of contouring and different thicknesses amongst the various inserts.

As well as having a higher degree of superplasticity from the parent body, the or each insert may be in a different metallurgical condition, for example may have a different temper, degree of hardening or grain size. It may also have a different chemical composition, or may even be a different material entirely.

The preferred shape of the blank is sheet-like or plate-like, but it could be tubular, or an extrusion or casting, depending upon the circumstances. The component parts making up the blank - i.e. parent body and insert(s) will be shaped to give the required final shape to the blank and thus one or both of the blank and/or insert may be 2D or 3D. In particular, the insert may with advantage be preformed to approximate to the eventual 3D shape required of it..

The thickness of the materials used to fabricate the blank are selected to meet the particular requirements of use. FSW has been demonstrated to work down to a thickness of about 1.2 mm and, at the upper end, pneumatic superplastic forming of plates 10 mm thick or possibly thicker still can be contemplated. Such thick plates can be readily joined by friction stir welding but for superplastic forming the material would preferably incorporate materials having a grain size of 10 microns or less, preferably 5 microns or less, which inherently have very low flow stress making, for example, pneumatic forming, a realistic possibility.

The most likely materials for the components of the blank are metallic materials such as aluminium alloys or magnesium alloys, but plastics materials are also possible.

The time needed to form a sheet metal part by SPF is dictated by the superplastic characteristics of the starting sheet, the process conditions (temperature and applied pressure) and the degree of strain required to stretch the sheet into conformance with the mould. Superplastic deformation is achieved over a discrete strain rate range within which the material exhibits a high strain rate sensitivity. For a given alloy this superplastic strain rate range can be modified by the prevailing grain size. Within limits larger grains: slower forming, finer grains: faster forming. Additionally, finer grain size results in a lower flow stress for a given rate of forming. This knowledge has led to the development of "high strain rate" fast forming superplastic alloys. Such alloys may be of conventional composition but have been thermo-mechanically processed by processes such as "equal channel angular pressing" (ECAP) or "friction stir processing" (FSP) to yield ultra fine stable grain size, or they have been produced by alternative processing methods such as mechanical alloying and physical vapour deposition.

These "fast forming" alloys have some common limitations. They are expensive to produce and have not, at least as yet, shown the ability to be easily scaled up to produce full size sheets. These limitations have meant that their promise of faster superplastic forming for commercial parts production has not been realised.

The present invention enables the utilisation of these "fast forming" materials as local inserts in regions of higher strains within a more cost- effective larger sheet of "regular" superplastic alloy or conventional non-superplastic material. This allows the "combination sheet" to form more quickly and for the high cost of the insert material, to have limited impact on overall cost.

In order that the invention may be better understood, several embodiments thereof will now be described by way of example only and with reference to the accompanying drawings in which:-
Figures 1 to 4 are diagrammatic plan views of rectangular blanks suitable for use in the method of the present invention;
Figures 5A, B and C are views similar to those of Figure 1, showing three further configurations of blank;
Figures 6A to F illustrate the sequence of steps in a typical forming method according to the invention;
Figure 7 is a diagrammatic perspective view of the shaped part to be made using the method illustrated in Figure 6;
Figures 8A-F are a series of sectional views for the purpose of clarifying the manner in which an insert may be joined to a parent body of sheet-like material;
Figures 9 and 10 are sectional views showing the assembly of a blank from a sheet-like parent body and a 3-D insert;
Figure 11A is a diagrammatic side sectional view of a test apparatus used in experiments to test the performance of the blank during forming;
Figure 11B is a slightly enlarged view of the blank after forming in the apparatus of Figure 11A, and intended to illustrate certain features thereof;
Figure 12A is a section through one embodiment of an insert used in the aforesaid experiments; and
Figures 12B and C are comparative views of the blank after forming in the aforesaid experiments, Figure 12B showing the result of using a plain insert, and Figure 12C showing the result of using an insert having the shape shown in Figure 12A.

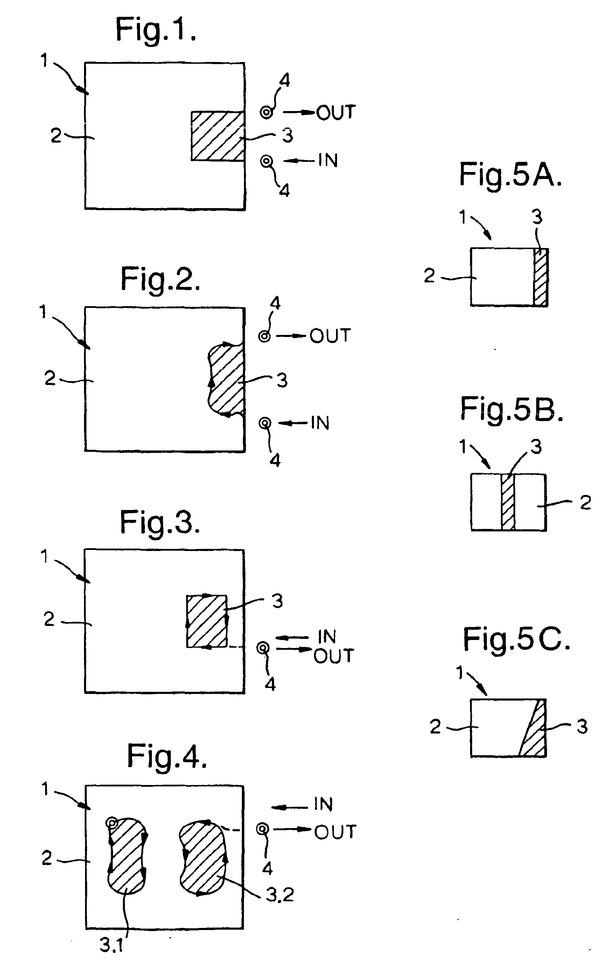

Referring firstly to Figure 1, there is shown a blank 1 of rectangular shape, and made out of sheet material. It will be understood that the size and shape of the blank will be dictated by the individual requirements and will not necessarily be as shown.

The blank has a composite structure comprising a parent body 2 and an insert 3, the latter being shown shaded. The join between the insert and the parent body 2 is made by welding, using the technique of friction stir welding. Friction stir welding is effected by passing a rotating or reciprocating tool along the joint line, and this is illustrated diagrammatically in Figure 1, with the tool being represented by the reference 4. In the case of a rotating tool, the tool 4 rotates about an axis which is vertical or near vertical to the general plane of the blank and may, for example, be moved into the joint at the arrow marked IN, thence round the join line, and exitting the joint at the arrow marked OUT. When utilising this method, care needs to be taken to avoid bending of the tool as it is introduced into the joint at the IN arrow. Rather than simply pushing the tool into the metal, a better way is to plunge the tool vertically into the metal a distance into the joint line greater than the tool radius from the edge. The tool may then be moved around the joint line in the manner just described.

As will be explained in more detail below, the blank illustrated in Figure 1 is subject to a hot forming operation to produce a 3D article of desired shape. During this operation the material of the blank will be deformed and the inherent plasticity of the material of the blank is relied upon during this deformation. However, the inherent plasticity may not be sufficient to produce complex shapes, including such features as sharp curves and corners, and here a material having superplastic properties may be required. In practice, it is often the case that only a part of the blank needs to have superplastic properties, since the remainder of the blank is either not deformed at all during the forming process, or is deformed only to an extent that is within its inherent capabilities. In such cases, it is clearly wasteful to provide a blank which is made wholly of the expensive superplastic material when only a small part is subject to deformation sufficient to need superplastic properties.

The blank illustrated in Figure 1 meets this requirement by providing that just a part of the blank, namely the insert 3 is made of a material having superplastic properties. The parent body 2 can be of conventional sheet material, although the invention does not preclude the possibility that the parent body also has superplastic properties, but to a lesser extent. Thus, in a particular example, the parent body 2 is made of low-cost conventional aluminium alloy sheet, whereas the insert 3 is made from a more expensive superplastic aluminium alloy. Note, however, that the insert and the parent body do not both have to be of the same material (aluminium in this case); the insert could be a superplastic variety of some other material.

The insert 3 is made of such a size and shape, and is positioned with respect to the parent body 2, such that it corresponds to that area of the blank 1 which requires superplastic properties. In addition, it will be seen from the above-referred to patent application No. US 2002/0079351 that the use of FSW can itself create or enhance superplastic properties in a material which would otherwise not possess such properties, and it will thus be seen that the area of superplasticity might in fact be extended into the parent body 2 in the immediate vicinity of the weld line during the FSW process.

The exact shape and location of the insert with respect to th e parent body can be determined in various ways. For example computational simulation methods such as non-linear finite modelling may be used to analyse the variation of thickness that will result during the forming process. The contoured thickness and location of the insert necessary to achieve a uniform final thickness after deformation can then be calculated. Alternatively, forming trials may be performed using a biaxial grid marked sheet to determine regions of high strain in the formed part, and the origin of these regions on the unformed flat sheet.

Figures 2 to 4 illustrate various blanks having differently shaped and/or positioned inserts 3. The blank shown in Figure 2 is the same as that shown in Figure 1, except that the insert 3 has a different shape. The blank shown in Figure 3 has an insert 3 which is completely surrounded by the material of the parent body 2. In this case the route of the FSW tool 4 is as shown, being shown dotted where the route passes through the material of the parent body 2 and in solid where it passes round the joint line itself. Since a complete passage round the joint line returns the FSW tool to the point at which it started, it is most convenient to have the tool leave the blank by the same route as it entered. The blank shown in Figure 4 has two inserts 3.1 and 3.2, each being shaped as required for the particular application. Each insert is joined around its perimeter to the parent body 1 by FSW. In the case of insert 3.1, the FSW tool 4 is plunged into the joint line at some point, then moved around the joint line and back to the same point, at which point the tool is removed and the resultant hole plugged. A suitable plug may, for example, be friction stir welded in place using well-known techniques. In the case of insert 3.2, the same technique as is used in the blank of Figure 3 is used to effect welding of the joint.

Figure 5 shows 3 more blanks suitable for use with the method of the present invention, each of these having differently shaped and positioned inserts. It will be understood that these inserts will be joined to the parent body by FSW; in the case of the embodiment shown in Figure 5B, this will involve two separate welds.

The thickness of the or each insert 3 may be the same as or different to that of the parent body 2. This will enable that part of the blank which comprises the insert to have different mechanical properties to the remainder, a feature which may be required in the finished part, or in the forming process itself. In particular, making the insert thicker than the parent body will not only stiffen that part of the blank but also may compensate, wholly or in part, for any thinning which occurs during the forming process. Thus, by selecting an appropriate additional thickness before forming, a near uniform thickness can be achieved in the part after forming, even despite the different strain levels. Alternatively, the insert may be made of sufficient thickness to leave a thickened region in the formed part. Such a thickened region might be required for functional reasons, for example, to give greater strength or stiffness, or to provide for a threaded connection.

To facilitate FSW of an insert which is of different thickness, it is preferred to bring the thickness of the facing edge along the join line to be the same.

As well as or instead of making the insert of different thickness than the parent body, the surface of the insert may be contoured to provide a varying thickness across its area. Such contouring may be applied to one or both surfaces of the insert although usually the contoured face will be on the side that does not come into contact with the tool (i.e. it will be on the fluid side). Insofar as such contouring may result in the facing edges of the join line being of different thickness, it is desirable, as before, to bring these facing edges to the same thickness to facilitate the passage of the FSW tool.

It is envisaged that the blanks shown in Figures 1 to 5 may be used in a forming process utilising a heated mould and fluid pressure to stretch the blank into contact with the mould surface. The position, size and shape of the insert 3 will be such that that part of the blank which comprises the parent body 2 will be brought into contact with that part of the mould whose geometry is such that it requires only a modest strain in the blank (within the capabilities of the parent body) whereas that part of the blank which comprises the insert will be brought into contact with that part of the mould whose geometry requires a higher strain which is not within the capabilities of the material of the parent body (for example because such strain would result in excessive thinning or require protracted forming times) but can be formed successfully from the more expensive superplastic material of the insert. The benefit is thus that the cost of the composite blank (parent body 2 + insert 3) will be less than a blank fabricated wholly from the more expensive superplastic material. Currently many parts formed from superplastic materials have only relatively small local regions, often amounting to less than 10% of the total area of the blank, where significant strain (for example greater than 50%) is needed to create the geometry of the desired part.

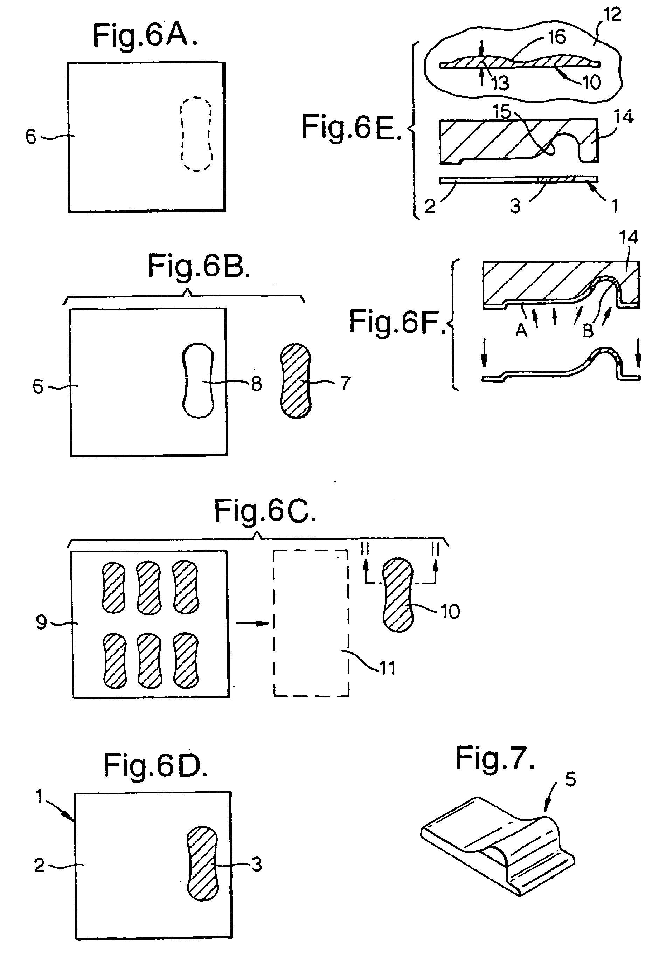

There will now be described, with reference to Figures 6 and 7, a typical sequence of operations in forming a shaped part in accordance with the method of the invention. The part to be formed is illustrated diagrammatically in Figure 7, in which the region 5 containing sharp curves and corners is assumed to be one which, during the forming process, will cause high strain in the material to be used to fabricate the part.

The first step in the process (Figure 6A) is to select a suitable piece 6 of sheet material to form the parent body 2. A piece 7 of material is then cut out of the sheet 6 (Figure 6B) to leave a correspondingly-shaped hole 8 in sheet 6.

Meanwhile a sheet 9 of a material exhibiting superplastic properties is selected and a piece 10 is cut from this sheet, corresponding in size and shape to the hole 8 in sheet 6 (Figure 6C). It is assumed that the remaining pieces cut out of the sheet 9 will be used to fabricate subsequent blanks. A section 11-11 through piece 10 is represented by the dotted frame 11. As detailed in enlargement 12, the piece 10 may optionally have a contoured surface 16, providing additional thickness at 13, for example to compensate for local thinning, as explained above.

The piece 10 is now fitted into the hole 8 and welded in place to complete the blank 1 using FSW (Figure 6D). Thus it will be seen that the piece 6 of Figure 6B becomes the parent body 2 of the blank 1, and the piece 10 of Figure 6C becomes the insert 3 of the blank 1.

The completed blank 1 is now placed over a mould 14 having a cavity 15 shaped to correspond to the part to be formed (Figure 6E). It will be noted that the insert 3 is positioned so as to correspond to the region 5 in the part to be formed. Usually, the blank is clamped around its edges before fluid pressure, as represented by arrows A,B is now applied to stretch the material of the blank into the mould cavity 15 (Figure 6F), thus producing the shape required, as shown in section on the right-hand side of Figure 6F. It will be seen that, during this forming process, part of the parent body is deformed, but not to an extent beyond that of which it is capable. For this purpose, the inherent plasticity of the material of the parent body may be relied upon, or it may be enhanced by treating it to give a level of superplasticity sufficient to enable it to undergo the deformation required of it. It will be seen that a complex part might have several areas of different superplasticity, including some areas which do not exhibit superplasticity at all, these being fabricated with one or more inserts FSW welded into the parent body to provide a potentially quite complex distribution of levels of superplasticity across the blank. It will also be seen that it is possible to provide an insert within an insert to achieve such multiple levels of plasticity. The use of inserts makes such complex arrangements possible.

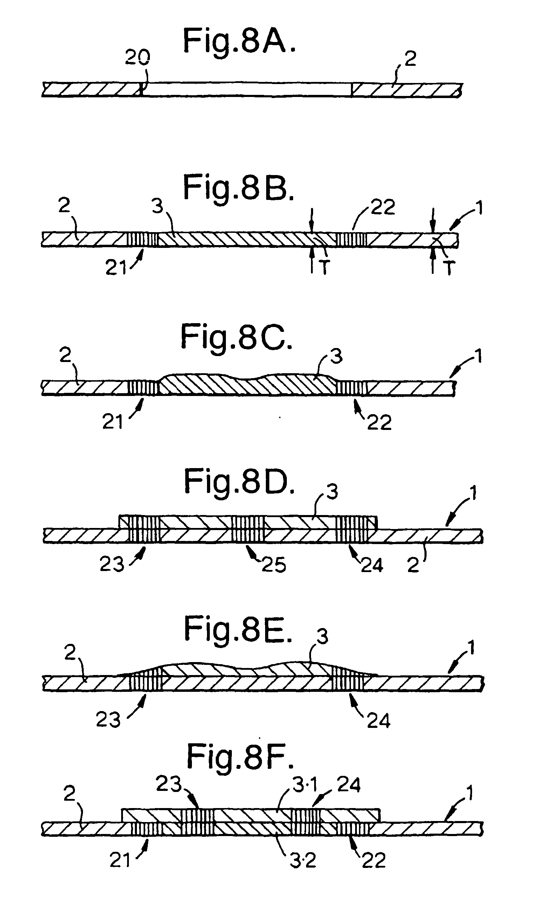

Referring now to Figure 8, there are shown a series of views intended to clarify the various ways in which an insert 3 can be fitted to a parent body 2 to fabricate a blank 1 in sheet form. Figure 8A shows the parent body 2 having a prepared hole 20 to receive the insert 3. Figure 8B shows the insert after fitting, and illustrates at 21,22 the weld areas created by FSW. It will be noted that the thickness T of the insert is the same as that of the parent body. Figure 8C shows a view similar to that of Figure 8B, but in which the upper surface of the insert is contoured, as discussed above. Figure 8D shows the joining of an insert 3 in the form of a patch onto the parent body 2 in order to create a layered structure. References 23 and 24 show the FSW welds required to effect joining. Reference 25 shows a further optional weld which may be needed for added strength and/or where the insert is of a larger size. Figure 8E is similar to Figure 8D, but shows an insert in the form of a patch having a contoured upper surface. Figure 8F shows the joining of an insert 3.1 in the form of a patch over an existing insert 3.2 such as illustrated in Figure 8B in order to form a layered insert. Advantageously both parts 3.1 and 3.2 of the layered insert have a similar level of superplasticity so that the performance of one part does not impair the other. References 21 to 24 shows the various FSW welds which are used to attach the insert part 3.2 to the parent body (welds 21,22) and to attach the insert part 3.1 to the insert part 3.2 (welds 23,24) although the welds may be arranged differently, as required.

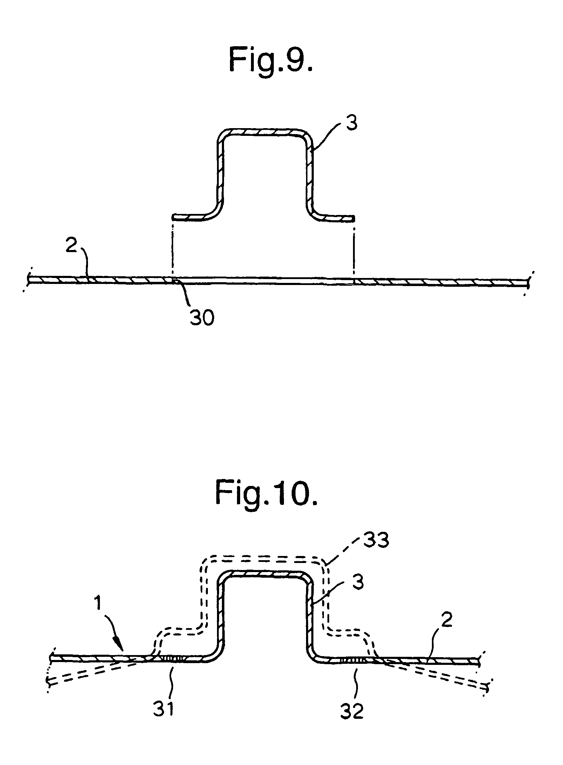

Reference is now made to Figures 9 and 10 which illustrate the fabrication of a blank 1 from a sheet-like parent body 2 and an insert 3 in the form of a cup-shaped preform. The insert 3 is made of a material having superplastic properties and, instead of being planar, is preformed to a 3D shape approximating the ultimate desired shape. The particular shape illustrated is cup-shaped but this can, of course, be adapted to suit particular requirements. The preformed shape may be realised, for example, by a conventional press forming operation or by a separate superplastic forming operation. The forming operation may optionally be followed by heat treatment, for example annealing, prior to superplastic forming.

Figure 9 shows the parent body 2 having a prepared hole 30 to receive the insert 3. Figure 10 shows the insert after fitting and illustrates at 31, 32 the weld areas created by FSW. Also illustrated in Figure 10, in dotted outline 33, is an example of what the ultimate shape of the blank might be after the superplastic forming operation.

There now follows some non-limiting examples of combinations of parent body/insert materials that could be used in the present invention. In each case the materials are aluminium alloy sheet identified using their Aluminum Association international alloy designations, that on the left being the parent body, that on the right, the insert:
(i) Standard AA 5083 to Superplastic AA 5083
(ii) Standard AA 2024 to Superplastic AA 2004
(iii) Standard AA 7075 to Superplastic AA 7475
(iv) Standard AA 6061 to Superplastic AA 2004

Typical starting gauges might be 1.9 mm (0.075 inches) of standard AA 7075 (for the parent body), and a 4.45 mm (0.175 inches) contoured insert of superplastic AA 7475. In this example, the bulk of the superplastically formed blank has only 50% thickness strain apart from a local area, represented by the insert, where the strain level reaches 250%. This combination of starting gauges would result in a more uniform overall thickness after SPF of about 1.27 mm (i.e. no local "thinness" in the high strain region).

The insert may be made from superplastically enhanced materials containing expensive alloying elements such as scandium as described in US 5,055,257 that have greatly improved superplastic properties. Another alternative could be the alloys developed by Grimes et al at Imperial College London produced by rapid cooling of liquid aluminium alloys containing 0.5 to 1.0%Zr as described in the ESPRC Report GR/L43848.

Experiments were undertaken to test the following methods in accordance with the invention:
I. Making a blank using a parent body in the form of a sheet of conventional superplastic material to which is joined by FSW an insert in the form of a piece of enhanced superplastic material.
II Making a blank using a parent body in the form of a sheet of non-superplastic material to which is joined by FSW an insert in the form of a piece of conventional superplastic material.
III Making a blank using an insert of conventional superplastic material which has also been machined on its surface to create a "thinning compensation" profile and inserting this contoured material into a parent body also of conventional superplastic material, and joining using FSW.

In all cases, the insert was joined to the parent body by plunging the FSW tool into the metal at a point close to an edge of the parent body, and thence moving the tool to the joint line between the insert and the parent body, thus forming a trail of friction stir processed metal leading from the tool entry point to the start of the weld proper. The entry point itself is arranged to be hidden by the clamping device (see below) during superplastic forming.

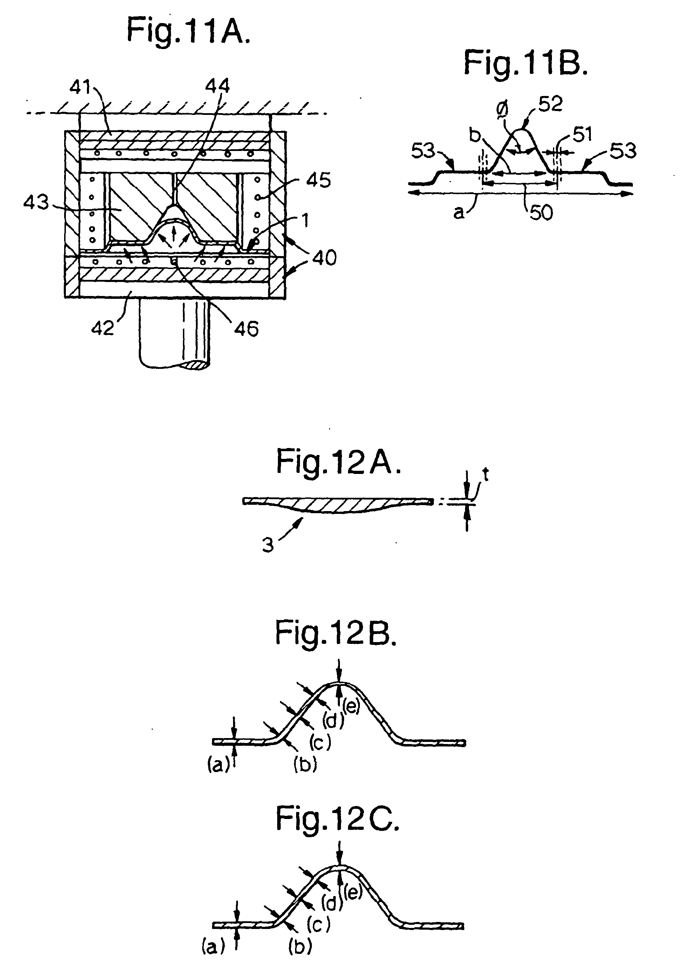

Tests on the blanks were carried out on a superplastic cone test apparatus illustrated diagrammatically in Figure 11A. The apparatus comprises a housing having thermally insulating side walls 40 and end wall 41 against which is applied a hydraulic clamping ram 42. The blank 1 to be tested is placed against a female cone-shaped die 43 having a vent 44 at its apex and is clamped at the edge by the clamping ram 42. Heaters 45 are positioned to enable the blank under test to be heated (see below). Orifices 46 are provided to supply gas under pressure to the underside of the blank 1 to force the blank against the die 43.

Figure 11B shows the blank after test forming in the superplastic cone apparatus, and illustrates various dimensions and features of the formed blank. The following dimensions are given:
a: 8 inches
b: 82 mm diameter
φ: 60° included angle.

The double ended arrow 50 indicates the boundaries of the insert illustrated by respective vertical solid lines. Surrounding these lines are vertical dotted lines which indicate the FSW zones 51. Reference 52 indicates the region of high strain, where the blank has deformed by the greatest amount, and thinned as a result, and references 53 indicate those regions which, during forming, were subject to a relatively lower strain, and are substantially undeformed.

### EXPERIMENT I

A 5mm thick superplastic sheet of AA7475 alloy was subjected to Friction Stir Processing (FSP). From this was machined an elliptical shaped insert (3¼" minor axis 3½" major axis). From a sheet of conventional superplastic AA7475 alloy 5mm thick two square pieces were cut, each measuring approximately 8" x 8". In one of the 8 inch square pieces an elliptical hole was cut in its centre. The elliptical hole was sized so that the elliptical shaped insert could be inserted into it with a close fit. (Note: the elliptical shape was chosen over a plain circle to eliminate any tendency for the insert to rotate during friction stir welding).

The 'fitted' insert and parent body were then joined by friction stir welding using a computer controlled friction stir welder capable of following the elliptical weld path.

The assembled blank was then clamped and heated *in situ* to 465°C in the machine illustrated in Figure 11. After 5 minutes of heating, gas pressure was introduced below the blank to pneumatically stretch the material into the die 43. The pressure remained constant and was timed from the application of pressure until part fracture occurred at the apex of the cone. The same procedure was applied to the second 8" square piece, which did not have any cut-out or insert. The comparative results and conditions are shown in Table I.

**Table I**

| **Sample** | **Test Temperature** | **Applied Gas Pressure** | **Time to Failure** | **Cone Height** | **Start Gauge** |
|---|---|---|---|---|---|
| A | 465°C | 150 psi | 9 mins | 60 mm | 5.0 mm |
| B | 465°C | 150 psi | 83 mins | 53 mm | 5.0 mm |

| | | | | | |
|---|---|---|---|---|---|
| A: 8 inch square piece of superplastic AA7475 alloy with a friction stir processed AA7475 insert joined by FSW. B: 8 inch square piece of superplastic AA7475 alloy (no insert). | | | | | |

In this example 35% of the total formed area is associated with the insert (the more expensive) with 65% associated with the less expensive 'conventional' superplastic AA7475 alloy. The remarkably better forming performance (faster and more formable of the friction stir processed insert) results from the much finer grain size (3-4 micron) developed during the friction stir process compared to the 12-15 micron size of the conventional superplastic AA7475 sheet.

The FSW interface between the insert and the blank was also superplastic enabling the cone shape to be formed without the weld failing, whereas a fusion weld (either MIG or TIG) would have created a non-superplastic, low ductility joint which would be prone to fracture under the forming conditions. In addition the room temperature properties of a fusion weld in this 7000 series alloy would be unacceptable in most service conditions.

### EXPERIMENT II

From a sheet of 5.0mm thick superplastic AA7475 alloy an elliptical insert was machined. Also from a sheet of 5.0mm AA7075 alloy a piece measuring 8" x 8" was cut and an elliptical hole corresponding to the size and shape of the insert was machined in it. The insert and blank were assembled using a computer controlled robotic friction stir welder.

The welded assembly was then tested in the cone test apparatus shown in Figure 11. A similar test was also carried out on a plain piece of AA7075 alloy. The comparative results and conditions are shown in Table II:

**Table II**

| **Sample** | **Test Temperature** | **Applied Gas Pressure** | **Time to Failure** | **Cone Height** | **Start Gauge** |
|---|---|---|---|---|---|
| C | 465°C | 150 psi | 75 mins | 52 mm | 5.0 mm |
| D | 465°C | 150 psi | 60 mins* | 15 mm | 5.0 mm |

| | | | | | |
|---|---|---|---|---|---|
| * did not fail C: 8-inch square piece of non-superplastic AA7075 alloy with a conventional superplastic AA7475 insert joined by FSW. D: Plain 8 inch square piece of non-superplastic AA7075 alloy (no insert). | | | | | |

In this experiment the superplastic AA7475 sheet costs approximately $15-18 per lb, whereas the non-superplastic AA7075 sheet costs $3-4 per lb. (about 20% the cost of the superplastic alloy).

However, the cone tests show that the AA7075 alloy (sample D) has very limited ductility compared to sample C, having the superplastic insert. Accordingly an actual part that required significant ductility only in a local region and the remaining area required only limited ductility, could be made for less cost if a local insert of the more expensive superplastic material was used in combination with a much less expensive sheet rather than using the superplastic material for the entire part.

### EXPERIMENT III

From a sheet of 5mm thick superplastic AA7475 alloy an elliptical insert was machined. This insert was then machined across its surface to create a contoured thickness (4.8mm thick at its pole down to 3.00mm around its edge) - see Figure 12A. This contoured insert was then friction stir welded into a 3.00mm 8" x 8" square piece of superplastic AA7475 alloy in which a mating elliptical hole had been machined. In addition a second 8-inch square piece was cut from 3.00mm thick AA7475 alloy, having no hole in its centre.

Both sampies were then subjected to testing in the cone test apparatus, shown in Figure 11, producing a cone of specific height and without failure. The forming conditions used are shown in Table III:

**Table III**

| **Sample** | **Test Temperature** | **Applied Gas Pressure** | **Time to Form** | **Cone Height** | **Start Gauge** |
|---|---|---|---|---|---|
| E | 490°C | 150 psi | 30 mins | 44 mm | 3 to 4.8 mm |
| F | 490°C | 80 psi | 20 mins | 44 mm | 3.0 mm |

| | | | | | |
|---|---|---|---|---|---|
| E: Blank with contoured insert. F: Plain Blank | | | | | |

After forming the cones were sectioned and their thickness distribution measured. The results are illustrated diagrammatically in Figure 12 B, C. Figure 12B illustrates the thickness distribution of the cone resulting from a constant thickness blank - it will be noted that the material thickness becomes less towards the apex of the cone. Figure 12C illustrates the thickness distribution of the cone resulting from the blank having the contoured insert shown in Figure 12A.

Table IV details the thickness measured at the position a to e shown in Figure 12B and C:-

**Table IV**

| Local Thickness at | | | | | |
|---|---|---|---|---|---|
| **Sample** | **a** | **b** | **c** | **d** | **e** |
| E | 3.02 mm | 2.55 mm | 2.58 mm | 2.37 mm | 2.57mm |
| F | 3.04 mm | 2.67 mm | 2.17 mm | 1.51 mm | 1.14 mm |

| | | | | | |
|---|---|---|---|---|---|
| E: Blank with contoured insert F: Plain Blank | | | | | |

This third experiment illustrates the ability to locally control the thickness in a superplastic part without requiring the complete sheet to be of a thicker gauge. This allows that the complete parts weight is not excessive and the associated material costs are minimised.

One effect which was noticed during Experiment II described above was that, due to the FSW weld being physically close to the high stress regions during forming, the welded metal tended to deform in preference to the superplastic material. This happened because the friction stir welded material becomes superplastic more readily than the normal superplastic material.

To counter this it may be desirable or necessary to position the weld away from those regions which are highly stressed during forming, for example, by making the insert large enough (or perhaps the right shape) to put the weld into lower stress regions.

A couple of further experiments were carried out to explore this effect:

### EXPERIMENT IV

A blank was prepared as in Example II with an insert 2.5 inches by 2.75 inches arranged so that the friction stir weld comes within the high stress region of the test. The welded assembly was then processed as in Example II but it was observed that the friction stir weld deformed before the superplastic AA7475 alloy. This led to an unacceptable distortion of the component. Using an insert that is sufficiently large to move the weld into the lower stress regions or shaped so as to avoid the high stress regions during forming avoids this problem.

### EXPERIMENT V

A blank was prepared as in Example IV and having the same dimensions but with a Friction Stir Processed AA7475 alloy insert as in Example I. Processing was carried out as in Example II. In this case the superplastically formed component did not show any unacceptable distortion. The forming properties of the friction stir weld and the friction stir processed insert were sufficiently closely matched to allow both to deform in harmony.

It is quite practical to combine all of the above described tests to produce a controlled thickness detail feature or features using one or more localized enhanced superplastic inserts which are friction stir welded into a much larger, lower cost parent body and produce the part at the fast forming rate associated with the inserted material un-compromised by the limited formability of the larger blank.

## Claims

1. A method of superplastic forming, said method comprising the steps of:
preparing a blank (1) by joining at least one insert (3, 3.1, 3.2) to a parent body (2) by means of friction stir welding, one of the parent body (2) and the insert or inserts (3, 3.1, 3.2) being made of a material which exhibits superplastic properties; and
superplastic forming the blank (1) by pressuring it against a mould (14); wherein
that part or parts of the blank (1) which is made of superplastic material is located so as to correspond to an area (5) of the blank which, during the forming process, is to be deformed to a greater extent than the remainder of the blank (1).

2. A method as claimed in claim 1 wherein friction stir welding is carried out using a tool which is passed along the joint line between the insert and the parent body (2).

3. A method as claimed in either one of claims 1 or 2 wherein the parent body (2) is provided with a cutout (8) into which the insert (3, 3.1, 3.2) fits.

4. A method as claimed in claim 3 wherein said cutout (8) opens into an edge of the parent body (2) so that the insert (3, 3.1, 3.2) when joined to the parent body (2), forms at least part of the external edge of the blank (1).

5. A method as claimed in claim 3 wherein said cutout (8) is closed, thus forming a hole passing through the parent body (2).

6. A method as claimed in either one of claims 1 or 2 wherein the insert (3, 3.1, 3.2) is placed against the blank (1) and joined thereto so as to form a layered structure.

7. A method as claimed in claim 1 wherein at least one of the inserts (3, 3.1, 3.2) comprises that part of the blank (1) which is made of superplastic material.

8. A method as claimed in any one of the preceding claims wherein at least one of the inserts (1) is adapted to perform a mechanical function.

9. A method as claimed in any one of the preceding claims wherein at least one of the inserts (3, 3.1, 3.2) is preformed to a 3D shape.

10. A method as claimed in any one of the preceding claims wherein multiple inserts (3, 3.1, 3.2) are joined to the parent body (2) by friction stir welding, and wherein at least one of the inserts (3, 3.1, 3.2), and/or the parent (2) body are made of a material which has superplastic properties.

11. A method as claimed in claim 1 wherein the parent body (2) and the insert (3, 3.1, 3.2) are so sized and shaped that the joint between them is positioned in an area of the blank (1) which, during said forming step, is subject to a low stress insufficient to cause distortion of the joint.

## Patentansprüche

1. Verfahren zum superplastischen Umformen, wobei das Verfahren folgende Schritte umfasst:
Herstellen eines Formlings (1), indem mindestens ein Einsatz (3, 3.1, 3.2) durch Rührreibschweißen mit einem Grundkörper (2) verbunden wird, wobei der Grundkörper (2) oder der Einsatz bzw. die Einsätze (3, 3.1, 3.2) aus einem Material bestehen, das superplastische Eigenschaften aufweist, und
superplastisches Umformen des Formlings (1), indem er gegen eine Form (14) gepresst wird, wobei
der Teil oder die Teile des Formlings (1), die aus einem superplastischen Material bestehen, so angeordnet sind, dass sie einem Bereich (5) des Formlings entsprechen, der während des Umformungsverfahrens in einem größeren Ausmaß zu verformen ist als der Rest des Formlings (1).

2. Verfahren nach Anspruch 1, wobei die Rührreibschweißung mit Hilfe eines Werkzeugs durchgeführt wird, das die Verbindungslinie zwischen dem Einsatz und dem Grundkörper (2) entlang geführt wird.

3. Verfahren nach Anspruch 1 oder 2, wobei der Grundkörper (2) mit einem Ausschnitt (8) versehen ist, in den der Einsatz (3, 3.1, 3.2) hineinpasst.

4. Verfahren nach Anspruch 3, wobei der Ausschnitt (8) in einer Kante des Grundkörpers (2) gebildet ist, so dass der Einsatz (3, 3.1, 3.2) mindestens einen Teil der Außenkante des Formlings (1) bildet, wenn er mit dem Grundkörper (2) verbunden ist.

5. Verfahren nach Anspruch 3, wobei der Ausschnitt (8) geschlossen ist, wodurch eine Öffnung gebildet wird, die durch den Grundkörper (2) hindurchgeht.

6. Verfahren nach einem der Ansprüche 1 oder 2, wobei der Einsatz (3, 3.1, 3.2) an dem Formling (1) angeordnet und damit verbunden ist, um eine Schichtkonstruktion zu bilden.

7. Verfahren nach Anspruch 1, wobei mindestens einer der Einsätze (3, 3.1, 3.2) den Teil des Formlings (1) umfasst, der aus superplastischem Material besteht.

8. Verfahren nach einem der vorhergehenden Ansprüche, wobei mindestens einer der Einsätze (3, 3.1, 3.2) dafür ausgelegt ist, eine mechanische Funktion auszuführen.

9. Verfahren nach einem der vorhergehenden Ansprüche, wobei mindestens einer der Einsätze (3, 3.1, 3.2) in einer dreidimensionalen Form vorgeformt ist.

10. Verfahren nach einem der vorhergehenden Ansprüche, wobei mehrere Einsätze (3, 3.1, 3.2) durch Rührreibschweißen mit dem Grundkörper (2) verbunden sind und wobei mindestens einer der Einsätze (3, 3.1, 3.2) und/oder der Grundkörper (2) aus einem Material bestehen, das superplastische Eigenschaften aufweist.

11. Verfahren nach Anspruch 1, wobei der Grundkörper (2) und der Einsatz (3, 3.1, 3.2) so bemessen und geformt sind, dass die Verbindung zwischen ihnen in einem Bereich des Formlings (1) angeordnet ist, der während des Formungsschritts einer geringen Belastung ausgesetzt ist, die zum Verziehen der Verbindung nicht ausreicht.

## Revendications

1. Un procédé de formage superplastique, ledit procédé comprenant les opérations suivantes :
la préparation d'une découpe (1) par le raccordement d'au moins un insert (3, 3.1, 3.2) à un corps principal (2) au moyen d'un soudage par friction-malaxage, un élément parmi le corps principal (2) et l'insert ou les inserts (3, 3.1, 3.2) étant fabriqué dans un matériau qui présente des propriétés superplastiques, et
le formage superplastique de la découpe (1) en la pressant contre un moule (14), où cette partie ou ces parties de la découpe (1) qui sont fabriquées dans le matériau superplastique sont placées de façon à correspondre à une zone (5) de la découpe qui, au cours du processus de formage, est destinée à être déformée dans une plus grande mesure que le reste de la découpe (1).

2. Un procédé selon la Revendication 1 où un soudage par friction-malaxage est exécuté au moyen d'un outil qui est passé le long de la ligne de jointure entre l'insert et le corps principal (2).

3. Un procédé selon l'une quelconque des Revendications 1 ou 2 où le corps principal (2) est muni d'un trou découpé (8) dans lequel l'insert (3, 3.1, 3.2) s'ajuste.

4. Un procédé selon la Revendication 3 où ledit trou découpé (8) s'ouvre en une bordure du corps principal (2) de sorte que l'insert (3, 3.1, 3.2), une fois raccordé au corps principal (2), forme au moins une partie de la bordure externe de la découpe (1).

5. Un procédé selon la Revendication 3 où ledit trou découpé (8) est refermé, formant ainsi un trou passant par le corps principal (2).

6. Un procédé selon l'une quelconque des Revendications 1 ou 2 où l'insert (3, 3.1, 3.2) est placé contre la découpe (1) et raccordé à celle-ci de façon à former une structure stratifiée.

7. Un procédé selon la Revendication 1 où au moins l'un des inserts (3, 3.1, 3.2) comprend cette partie de la découpe (1) qui est fabriquée dans le matériau superplastique.

8. Un procédé selon l'une quelconque des Revendications précédentes où au moins l'un des inserts (3, 3.1, 3.2) est adapté de façon à exécuter une fonction mécanique.

9. Un procédé selon l'une quelconque des Revendications précédentes où au moins l'un des inserts (3, 3.1, 3.2) est préformé en une forme 3D.

10. Un procédé selon l'une quelconque des Revendications précédentes où plusieurs inserts (3, 3.1, 3.2) sont raccordés au corps principal (2) par un soudage par friction-malaxage, et où au moins l'un des inserts (3, 3.1, 3.2) et/ou le corps principal (2) sont fabriqués dans un matériau qui présente des propriétés superplastiques.

11. Un procédé selon la Revendication 1 où le corps principal (2) et l'insert (3, 3.1, 3.2) sont dimensionnés et façonnés de sorte que la jointure entre eux est positionnée dans une zone de la découpe (1) qui, au cours de ladite opération de formage, est soumise à une contrainte faible insuffisante pour provoquer une distorsion de la jointure.
